# FASCICULE DE BREVET EUROPEEN

(11) **EP 3 408 827 B1**
(45) Date de publication et mention de la délivrance du brevet: **06.11.2019**
(21) Numéro de dépôt: 17706585.1
(22) Date de dépôt: 27.01.2017
(51) Int. Cl.: G01B 11/16, G01B 11/24, G01B 11/06, G01N 21/88, G01N 21/95, G06T 7/00

(54) **MÉTHODE DE CONTRÔLE D'UNE PIÈCE DE MACHINE**
VERFAHREN ZUR ÜBERWACHUNG EINES MASCHINENTEILS
METHOD FOR MONITORING A MACHINE PART

(30) Priorité: 28.01.2016 FR 1650701
(43) Date de publication de la demande: 05.12.2018
(73) Titulaire: Safran Aircraft Engines, 75015 Paris (FR)
(72) Inventeur: ARQUIE, Fabien, Jean-Guillaume, 77550 Moissy-Cramayel (FR)
(74) Mandataire: Pichat, Thierry
(86) Numéro de dépôt international: PCT/FR2017/050198
(87) Numéro de publication internationale: WO 2017/129924

(56) Documents cités:
- US-A1- 2004 054 256
- US-A1- 2010 110 451
- US-A1- 2015 187 067

## Description

La présente invention concerne une méthode de contrôle dimensionnel d'une pièce de machine, notamment de turbomachine.

Les pièces de machine, notamment les pièces tournantes de turbomachines telles que les aubes qui peuvent être impactées par des corps étrangers, se dégradent au fur et à mesure de l'utilisation de la machine. C'est le cas notamment des zones renforcées par dépôt d'une couche de stellite (matériau très dur) qui se dégradent à cause de fortes frictions qu'elles subissent.

Afin de respecter les normes de sécurité les pièces, et plus particulièrement les zones de stellite, doivent présenter un niveau d'usure maximal sous peine de devoir être remplacées. Ainsi, lors des phases de maintenance, les pièces sont examinées afin de déterminer si leur niveau d'usure est acceptable ou non. En cas de niveau d'usure non acceptable, la pièce doit être remplacée.

Des méthodes de mesure de défauts sur des pièces de turbomachines sont décrites dans les documents US2015/0187067, US2010/0110451 et US2004/0054256.

Une méthode connue pour contrôler le niveau d'usure des pièces de turbomachine consiste en ce qu'un opérateur :
- démonte les pièces ;
- mesure l'épaisseur des pièces au moyen de machines de mesure tridimensionnelle par contact ;
- compare ces mesures avec des gammes de tolérances, et
- définit si les pièces peuvent être remontées sur la turbomachine ou si elles doivent être remplacées.

Cette méthode ne permet pas de réaliser une mesure précise de l'épaisseur des pièces. En effet, plusieurs paramètres influent de manière négative sur la mesure des pièces.

Premièrement les opérations, réalisées par l'opérateur, sont répétitives. Ainsi, et c'est particulièrement le cas pour la mesure et la comparaison des mesures, la faculté visuelle de l'opérateur diminue au fur et à mesure durant une journée de travail et l'opérateur peut, en fin de journée mal interpréter une mesure. Cela peut être le cas par exemple sur la dernière pièce d'une série de pièces identiques.

Deuxièmement, les machines de mesure tridimensionnelle à contact utilisent des éléments tels que des lecteurs de mesure à graduation ou des palpeurs qui peuvent se dérégler ou s'user avec le temps. Il est alors nécessaire de calibrer, de manière récurrente, ces éléments ou de les remplacer. Ces calibrations ou ces remplacements nécessitent une immobilisation temporaire de la machine et génère un coût d'exploitation important.

Troisièmement, les palpeurs couramment utilisés comprennent une tige terminée par une bille venant en contact avec la pièce à mesurer. Bien que des mesures assez précises puissent être obtenues, certaines zones de la pièce, notamment des zones peu accessibles ou de très petite taille peuvent ne pas être atteintes par le capteur. Ainsi, la mesure de la pièce ne peut pas être effectuée de manière optimale.

Enfin, le montage de la pièce sur un banc de la machine de mesure et l'usure dudit banc influent sur la qualité et le résultat de la mesure. Ainsi, la répétabilité de la mesure n'est pas optimale.

L'invention a notamment pour but d'apporter une solution simple, efficace et économique à ce problème.

A cet effet, l'invention propose, en premier lieu, une méthode de contrôle dimensionnel sans contact de l'usure d'une pièce de turbomachine, la méthode comprenant des étapes où, par l'intermédiaire d'un calculateur :
- on définit un plan de référence ayant un premier référentiel ;
- on acquiert, par mesure sur ladite pièce à contrôler, une modélisation d'une partie au moins de ladite pièce, sous forme d'un maillage tridimensionnel de contrôle ayant un deuxième référentiel, les premier et deuxième référentiels étant chacun orientés de façon prédéterminée par rapport à un troisième référentiel propre à la turbomachine, ledit plan de référence étant défini de manière à comprendre des points projetés selon une projection perpendiculaire audit plan de référence, depuis ledit plan de référence, vers le maillage tridimensionnel de contrôle ;
- on contrôle la pièce, dans une zone commune au maillage tridimensionnel et au plan de référence, au moyen d'un algorithme dédié utilisant une projection de points et dans lequel :
   ∘ pour ladite zone commune, le plan de référence comprend un champ de points théoriques qui sont projetés selon ladite projection perpendiculaire audit plan de référence, depuis ledit plan de référence, vers le maillage tridimensionnel de contrôle ;
   ∘ pour chaque point projeté rencontrant le maillage, une distance de projection est calculée entre le plan de référence depuis lequel ledit point est projeté et l'intersection dudit point projeté avec le maillage tridimensionnel de contrôle ;
   ∘ on compare les distances de projection desdits points projetés rencontrant le maillage, de sorte à identifier une distance maximale, parmi lesdites distances de projection, et le point projeté d'usure maximale qui lui correspond,
   le procédé étant tel que :
   ∘ dans l'étape de comparaison, avant ladite comparaison des distances de projection des points, une première sélection des points est effectuée, dans laquelle on exclut les points projetés ne rencontrant pas le maillage tridimensionnel de contrôle,
   ∘ on détermine une épaisseur minimale d'usure de la pièce, mesurée entre la projection sur le maillage tridimensionnel dudit point projeté d'usure maximale et un quatrième référentiel propre à la pièce et orienté par rapport au deuxième référentiel,
   ∘ on compare ladite épaisseur minimale avec une plage de tolérance d'usure prédéterminée, et
- si le résultat de la comparaison d'épaisseur est compris dans ladite plage de tolérance d'usure prédéterminée, on définit la pièce comme conforme, si le résultat de la comparaison n'est pas compris dans ladite plage de tolérance d'usure prédéterminée, on définit la pièce comme non conforme.

De préférence, l'épaisseur minimale est mesurée perpendiculairement au quatrième référentiel.

Avantageusement, les points du champ de points sont répartis de façon uniforme sur le plan de référence.

Une telle méthode permet d'une part d'utiliser des moyens technologiques numériques pour s'affranchir de la baisse de la faculté visuelle des opérateurs et réaliser un contrôle précis indépendamment de l'instant auquel ces mesures sont réalisées.

De plus, cette méthode permet une meilleure répétabilité des opérations de contrôle puisque toutes les pièces à contrôler sont orientées dans le référentiel de la turbomachine. Ainsi, toute erreur de positionnement de la pièce à contrôler est évitée puisque la position de toutes les pièces à contrôler est prédéterminée.

Enfin, la précision du contrôle est accrue par rapport à la méthode connue puisque mêmes les zones peu accessibles peuvent être modélisées et, par conséquent, contrôlées.

Avantageusement, dans l'étape de comparaison, à partir des points non exclus, on détermine une zone spécifique à ladite pièce définie parmi l'ensemble de points croisant le maillage tridimensionnel de contrôle.

De même, dans l'étape de comparaison, une deuxième sélection de points peut être effectuée, dans laquelle on exclut les points ne faisant pas partie de la zone spécifique.

Lors de la deuxième sélection de points, on peut, pour chaque point projeté :
- mesurer un angle entre la projection dudit point projeté et une normale à une tangente au maillage tridimensionnel de contrôle, au croisement de la projection dudit point avec le maillage tridimensionnel de contrôle, et
- comparer ledit angle avec une plage de tolérance angulaire prédéterminée,

et, si l'angle est compris dans ladite plage de tolérance angulaire, alors le point est pris en compte pour définir la conformité de la pièce, si l'angle n'est pas compris dans ladite plage de tolérance angulaire, alors le point n'est pas pris en compte par l'algorithme dédié pour définir la conformité de la pièce.

La plage de tolérance angulaire peut être comprise entre 0° et 15°.

Ces sélections ont pour but de délimiter la zone spécifique à étudier, dont la topologie peut varier significativement en fonction de sa dégradation durant son utilisation dans la turbomachine.

Avantageusement, la pièce peut comprendre un revêtement qui la recouvre et dont l'épaisseur minimale d'usure est à déterminer.

Il est aussi décrit, sans qu'elle soit revendiquée, une installation de contrôle dimensionnel sans contact d'une pièce de turbomachine pour la mise en œuvre de la méthode de contrôle telle que précédemment décrite, l'installation comprenant :
- une unité d'acquisition tridimensionnelle apte à réaliser un maillage tridimensionnel de contrôle de la pièce à contrôler ;
- un calculateur apte à mettre en œuvre ledit algorithme dédié, et
- une interface de communication entre un opérateur et l'installation.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en coupe d'une turbomachine ;
- la figure 2 est une vue en perspective d'une aube de turbine de la turbomachine de la figure 1 ;
- la figure 3 est une vue de détail d'une aube de turbomachine à contrôler selon l'encart III de la figure 2 ;
- la figure 4 est une vue de détail d'un maillage d'une numérisation de la pièce de la figure 3, cette figure comprenant un médaillon de détail à échelle agrandie montrant le maillage ;
- la figure 5 est une vue de détail montrant une étape de la méthode de contrôle qui consiste en une projection de points sur le modèle numérisé pour déterminer si la pièce à contrôler est conforme ou non ;
- la figure 6 est un schéma représentant une étape de projection de points de la méthode de contrôle ;
- la figure 7 est une vue montrant en partie la détermination de l'épaisseur minimale de la pièce à contrôler ;
- la figure 8 est un schéma représentant en partie la détermination d'une zone du maillage de la figure 2 dans laquelle le contrôle d'usure doit être réalisé, et
- la figure 9 est une vue schématique montrant une installation de contrôle dimensionnel d'une pièce de turbomachine.

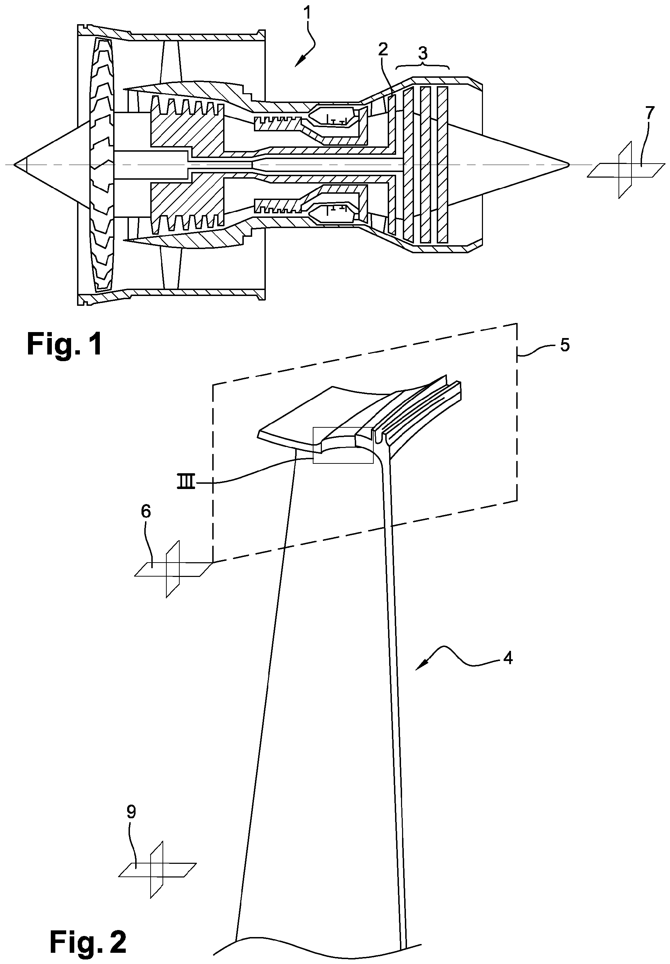

Même si d'autres pièces que l'aube 4 ci-après pourraient être contrôlées par la méthode ici présentée, on se réfère ci-après au cas du contrôle d'une aube. Aussi a-t-on représenté, sur la figure 1, une turbomachine 1 comprenant une turbine haute pression 2 et une turbine basse pression 3. Les turbines 2, 3 comprennent chacune plusieurs pièces, et notamment des aubes 4 qui peuvent être circonférentiellement aboutées et forment en partie un étage de turbine.

Au fur et à mesure de l'utilisation de la turbomachine 1, les aubes s'usent et le contrôle de leur usure est nécessaire afin que les aubes défectueuses soient remplacées pour préserver la turbomachine 1.

La figure 2 montre, en perspective, un détail d'une aube 4, dont les dimensions doivent être contrôlées afin de définir si la pièce est apte à être installée sur une turbomachine ou, au contraire, si elle doit être remplacée par une pièce conforme. Plus précisément on cherche à contrôler l'épaisseur d'une couche ou revêtement de renforcement mécanique qui recouvre, au moins en partie, l'aube 4 et en permet la protection, telle qu'une couche de stellite. Le stellite est un matériau très résistant qui permet de protéger les aubes 4 des frictions, notamment des échauffements.

La conformité d'une aube 4 peut donc s'entendre de la capacité de ladite aube 4 à présenter une couche de renforcement assez épaisse pour résister à la friction, notamment à l'augmentation de la température.

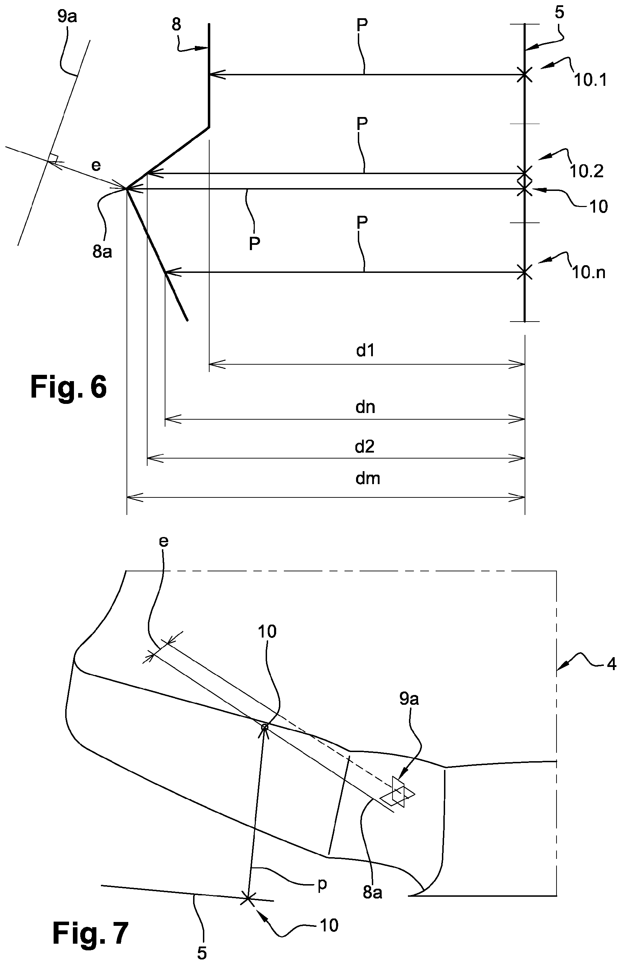

La méthode de contrôle comprend une première étape dans laquelle on dispose d'un plan de référence 5, représenté en figures 2 et 6. Ce plan de référence 5 comprend un premier référentiel 6. Le premier référentiel 6 est orienté de façon prédéterminée, c'est-à-dire de sorte à être positionné selon un référentiel propre à la turbomachine, appelé troisième référentiel 7 (figure 1), dans laquelle est montée l'aube à contrôler.

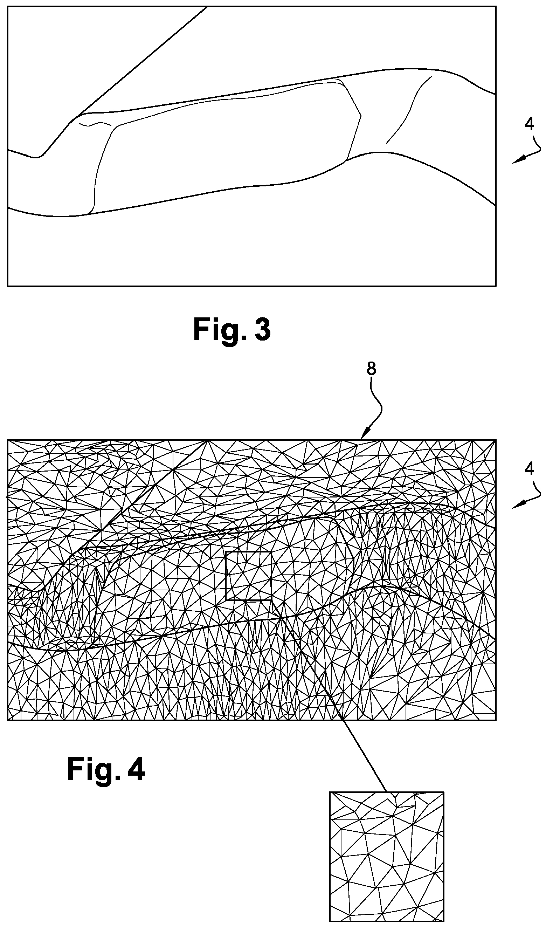

Dans une seconde étape de la méthode de contrôle, représentée en figure 4, l'aube 4 à contrôler (sous-entendu l'aube revêtue) est numérisée, à l'aide d'un scanner tridimensionnel, par exemple sous la forme d'un nuage de points, pour obtenir un maillage 8 tridimensionnel de contrôle, ci-après dénommé maillage 8 de contrôle. Le maillage 8 de contrôle comprend un deuxième référentiel 9 (figure 2).

On rappelle qu'un maillage est une reconstitution surfacique d'un contour externe d'un objet au moyen de triangles de différentes tailles, c'est à dire de surfaces formées de trois points, chaque triangle étant lié à plusieurs autres triangles de sorte que la reconstitution surfacique obtenue soit dépourvue de trous, c'est-à-dire dépourvue d'absence de surface.

De préférence, seule une partie de l'aube 4 à contrôler est numérisée. Toutefois, l'ensemble de l'aube 4 peut être modélisé en fonction de l'étendue de contrôle de l'aube 4.

Le maillage 8 de contrôle est ensuite, lui aussi, positionné par rapport à la turbomachine. Plus précisément, le deuxième référentiel 9 est orienté de façon prédéterminée par rapport au troisième référentiel 7. Par l'expression « de façon prédéterminée », on entend que le maillage 8 de contrôle est orienté de la même manière que la pièce 4 est réellement orientée, dans la turbomachine 1.

Ainsi, le plan de référence 5 et le maillage 8 de contrôle ont un référentiel commun, ici le troisième référentiel 7. Ce référentiel commun permet notamment de pouvoir assurer une troisième étape de la méthode de contrôle qui consiste à déterminer, l'usure de l'aube 4 dans une zone commune du plan de référence 5 et du maillage 8 de contrôle pour définir si l'aube 4 peut ou non être utilisée, notamment sur la turbomachine 1.

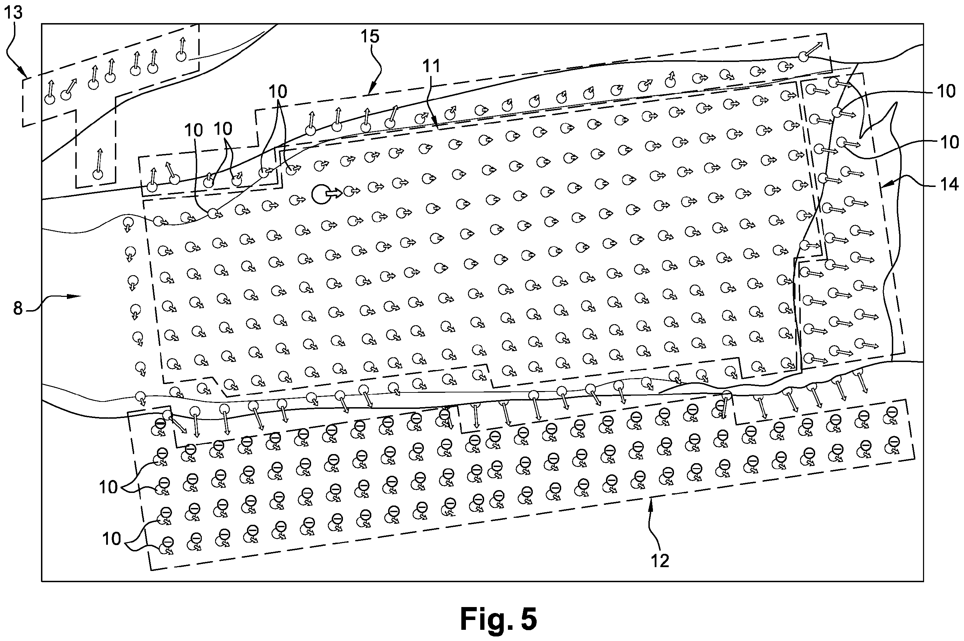

Dans cette troisième étape, un algorithme dédié contrôle l'usure de l'aube 4 à contrôler par projection de points à partir du plan de référence 2, comme décrit ci-dessous et représenté sur les figures 5 et 6.

D'abord, un champ de points 10 (référencés 10.1, 10.2, ..., 10.n sur la figure 6) est projeté selon une projection P perpendiculaire audit plan de référence 5, depuis ce dernier, vers le maillage 8 de contrôle jusqu'à ce que lesdits points 10; 10.1, 10.2, ..., 10.n rencontrent le maillage 8 de contrôle. Avantageusement, les points 10.1, 10.2, ..., 10.n sont répartis de façon uniforme sur le plan de référence 5, par exemple selon un pas constant.

Ensuite, pour chaque point 10 ; 10.1, 10.2, ..., 10.n projeté, une distance d1, d2, dn, ... est calculée entre le plan de référence 5 depuis laquelle ledit point 10 ; 10.1, 10.2, ..., 10.n est projeté et l'intersection dudit point 10 ; 10.1, 10.2, ..., 10.n avec le maillage 8 de contrôle.

Puis, l'algorithme dédié compare, entre elles, les distances de projection d1, d2, dn,..., de sorte à identifier, parmi elles, une distance maximale dm.

La figure 6 montre, de manière schématique, la projection des points 10 ; 10.1, 10.2, ..., 10.n depuis le plan de référence 5 vers le maillage 8 de contrôle, et la détermination de la distance maximale dm.

Ensuite, à partir du point 10 projeté définissant la distance maximale dm, l'algorithme dédié détermine une épaisseur e minimale de l'aube 4, entre le croisement dudit point 10 projeté avec le maillage 8 tridimensionnel et un quatrième référentiel 9a propre à la pièce 4 et orienté par rapport au deuxième référentiel 9 du maillage 8 tridimensionnel. L'épaisseur e minimale et le quatrième référentiel sont représentés sur les figures 6 et 7.

Sur les figures 6 et 7, la référence 8a désigne schématiquement la projection du point 10 d'usure maximale sur le maillage 8 tridimensionnel, correspondant à la distance maximale dm.

De préférence, l'épaisseur minimale est mesurée perpendiculairement au quatrième référentiel. L'algorithme dédié compare alors l'épaisseur minimale avec une plage de tolérance d'usure prédéterminée.

Si le résultat de la comparaison est compris dans ladite plage de tolérance d'usure prédéterminée, l'aube 4 est définie conforme, en revanche, si le résultat de la comparaison n'est pas compris dans ladite plage de tolérance d'usure prédéterminée, l'aube 4 est non conforme.

Une aube 4 présentant une usure trop importante est rejetée afin de garantir une bonne sécurité d'utilisation de la machine. En effet, une usure trop importante de l'aube 4 peut entraîner son dysfonctionnement, voire sa rupture.

Dans le but de délimiter une zone spécifique 11 de contrôle d'une aube 4, plusieurs niveaux de sélection de points 10 projetés peuvent être réalisés lors de l'étape de comparaison.

Selon l'invention, dans un premier niveau, une première sélection des points 10 est effectuée, dans laquelle les points 10 projetés ne rencontrant pas le maillage 8 de contrôle sont exclus, exclusion représentée par une zone 12 entourée en traits pointillés courts sur la figure 5. Cette exclusion est justifiée par le fait qu'il est inutile, et surtout impossible, de calculer une distance entre l'origine du point 10 de projection, c'est-à-dire le plan de référence 5, et l'intersection de la projection P avec le maillage 8 de contrôle.

Cette sélection peut être réalisée par l'algorithme dédié lorsque ce dernier détecte que pour un point 10 déterminé, la projection de celui-ci n'a pas rencontré le maillage 8 de contrôle ou que le calcul de la distance entre l'origine et l'intersection est trop long à réaliser ou qu'une valeur ne peut pas être déterminée.

Dans un deuxième niveau, à partir des points 10 non exclus suite à la première sélection, l'algorithme dédié détermine la zone 11 spécifique à ladite aube 4, définie parmi l'ensemble de points 10 croisant le maillage 8 de contrôle. Cette sélection permet d'exclure de la méthode les points 10 qui ne sont pas inclus dans la zone 11 spécifique précédemment déterminée. La zone 11 spécifique est représentée sur la figure 5 par une zone entourée en traits pointillés longs.

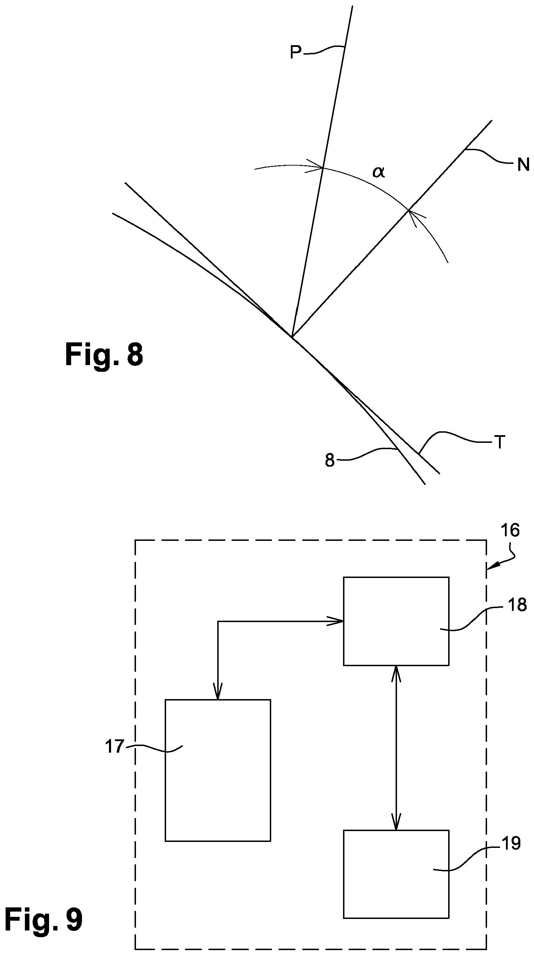

La figure 8 illustre en partie la détermination de la zone 11 spécifique lors d'une deuxième sélection de points, c'est-à-dire dans le deuxième niveau.

Lors de la deuxième sélection de points, pour chaque point 10 ; 10.1, 10.2, ..., 10.n projeté :
- on mesure un angle α entre la direction de projection P dudit point 10; 10.1, 10.2, ..., 10.n projeté et une normale N à une tangente T au maillage 8 tridimensionnel de contrôle au croisement dudit point projeté avec le maillage 8 tridimensionnel de contrôle, et
- on compare ledit angle α avec une plage de tolérance angulaire prédéterminée,
si α est dans ladite plage de tolérance angulaire alors le point 10 ; 10.1, 10.2, ..., 10.n est pris en compte pour déterminer l'usure de l'aube 4, en revanche, si α est en dehors de ladite plage de tolérance angulaire, alors le point 10; 10.1, 10.2, ..., 10.n n'est pas pris en compte pour déterminer l'usure de l'aube 4.

De préférence, la plage de tolérance de l'angle α est comprise entre 0° et 15°, la valeur de l'angle α étant une valeur absolue.

Enfin, dans un troisième niveau, une nouvelle sélection est effectuée dans laquelle sont exclus les points 10 situés dans une portion dite de refoulement, c'est-à-dire une portion non existante sur l'aube 4 à contrôler à son origine et dans laquelle la matière flue au fur et à mesure de l'utilisation de la turbomachine 1.

Ainsi, seule la zone 11 spécifique sera analysée par la méthode, typiquement une zone de l'aube 4 dans laquelle se concentrent des contraintes mécaniques lorsque la machine est en utilisation. Ces sélections ont pour but de délimiter la zone spécifique à étudier, dont la topologie peut varier significativement en fonction de sa dégradation durant son utilisation dans la machine.

Autour de la zone 11 spécifique, plusieurs zones de points 10 non pris en compte sont répertoriées. Une première zone 13 comprend des points 10 qui sont hors de la zone pour laquelle on cherche à contrôler l'usure. Toutefois, contrairement à la zone 12 précédemment décrite, les points de la zone 10 croisent le maillage 8 de contrôle. Une deuxième zone 14 comprend les points hors de la sélection du deuxième niveau. Les points 10 de la zone 13 pourraient aussi être considérés comme appartenant à la deuxième zone 14, c'est-à-dire qu'ils pourraient être exclus lors de la deuxième sélection. Enfin, une troisième zone 15 est volontairement exclue, cette sone 15 comprenant les points 10 situés dans la portion dite de refoulement, c'est-à-dire une portion non existante sur l'aube 4 à contrôler à son origine et dans laquelle la matière flue au fur et à mesure de l'utilisation de la turbomachine 1. Cette zone 15 correspond à l'exclusion des points 10 lors de la sélection du troisième niveau.

Il est toutefois précisé que sur la figure 5, l'angle de vue utilisé rend difficile la distinction entre certains points 10 de la deuxième zone 14 et ceux de la zone 11 spécifique. On notera tout de même que si l'orientation des flèches des points 10 sont plus courtes dans la zone spécifique 11 que les flèches des points 10 de la deuxième zone 14, ce qui montre que l'angle α des normales N avec les projections respectives des points 10 de la zone 14 est supérieur à la tolérance angulaire prédéterminée.

Pour l'application d'une méthode telle que celle qui vient d'être décrite, on utilise une installation 16 de contrôle, non revendiquée, représentée en figure 9, qui comprend :
- une unité 17 d'acquisition de modèles tridimensionnels, typiquement un scanner tridimensionnel ;
- un calculateur 18, et
- une interface 19 de communication, typiquement un ordinateur.

L'unité 17 d'acquisition permet d'obtenir un nuage de points représentant l'aube 4 à contrôler. Plus précisément, cette unité 17 d'acquisition permet d'obtenir un maillage numérique tridimensionnel fidèle de l'aube 4 à contrôler dans lequel toutes les surfaces, aussi petites soient elles, sont reproduites.

Avantageusement, l'unité 17 d'acquisition comprend une table de montage ayant des éléments de blocage et de maintien en position des aubes 4 à contrôler, ces éléments étant mobiles pour s'adapter à des aubes 4 de différentes dimensions et de différentes géométries. De préférence, des plans de positionnement de ces éléments de blocage et de maintien en position seront réalisés de sorte que pour toutes les aubes d'une même gamme, le référentiel et la position soient la même dans le scanner.

Le calculateur 18, permet de mettre en œuvre l'algorithme dédié qui, comme nous l'avons vu précédemment, génère le maillage 8 de contrôle, détermine l'usure maximale de l'aube 4, et fournit une information relative à la conformité dimensionnelle de la zone de l'aube 4 à contrôler.

Enfin, l'interface 19 de communication permet à un opérateur, d'une part de suivre en temps réel l'avancement du contrôle de l'aube 4 et, d'autre part, d'interagir avec le calculateur 18 pour modifier ou apporter de nouvelles consignes pour l'exécution de l'algorithme.

De plus, l'interface 19 de communication informe l'opérateur du résultat du contrôle de sorte que l'opérateur donne l'ordre que l'aube 4 peut être remontée sur la turbomachine 1 ou qu'au contraire elle doit être remplacée par une nouvelle aube 4.

La méthode de contrôle qui vient d'être décrite offre plusieurs avantages.

D'abord, la qualité du contrôle est supérieure par rapport à un contrôle réalisé uniquement par un opérateur utilisant des machines de mesures mécaniques dont la fiabilité décroit dans le temps. En effet, l'utilisation de moyens numériques sans contact permet de s'affranchir de la détérioration des éléments mécaniques et offre un résultat de contrôle précis même dans les zones difficilement atteignables par une machine de mesure mécanique.

Ensuite, une répétabilité correcte du contrôle peut être faite pour plusieurs pièces similaires.

Enfin, le contrôle d'une aube 4 est accéléré par rapport à une méthode classique en ce que toutes les mesures et les comparaisons sont réalisés par un calculateur 18.

## Revendications

1. Méthode de contrôle dimensionnel sans contact de l'usure d'une pièce (4) de turbomachine, la méthode comprenant des étapes où, par l'intermédiaire d'un calculateur (18) :
- on définit un plan de référence (5) ayant un premier référentiel (6);
- on acquiert, par mesure sur ladite pièce (4) à contrôler, une modélisation d'une partie au moins de ladite pièce (4), sous forme d'un maillage (8) tridimensionnel de contrôle ayant un deuxième référentiel (9), les premier (6) et deuxième (9) référentiels étant chacun orientés de façon prédéterminée par rapport à un troisième référentiel (7) propre à la turbomachine, ledit plan de référence (5) étant défini de manière à comprendre des points (10) projetés selon une projection perpendiculaire (P) audit plan de référence (5), depuis ledit plan de référence, vers le maillage (8) tridimensionnel de contrôle ;
- on contrôle la pièce (4), dans une zone commune au maillage (8) tridimensionnel et au plan de référence (5), au moyen d'un algorithme dédié utilisant une projection de points (10) et dans lequel :
∘ pour ladite zone commune, le plan de référence (5) comprend un champ de points (10; 10.1, 10.2,..., 10.n) théoriques qui sont projetés selon ladite projection (P) perpendiculaire audit plan de référence (5), depuis ledit plan de référence, vers le maillage (8) tridimensionnel de contrôle ;
∘ pour chaque point (10 ; 10.1, 10.2, ..., 10.n) projeté rencontrant le maillage, une distance de projection est calculée entre le plan de référence (5) depuis lequel ledit point est projeté et l'intersection dudit point projeté (10 ; 10.1, 10.2, ..., 10.n) avec le maillage (8) tridimensionnel de contrôle ;
∘ on compare les distances de projection desdits points projetés rencontrant le maillage, de sorte à identifier une distance maximale (dm), parmi lesdites distances de projection, et le point (10) projeté d'usure maximale qui lui correspond,
le procédé étant **caractérisé en ce que** :
∘ dans l'étape de comparaison, avant ladite comparaison des distances de projection des points, une première sélection des points (10) est effectuée, dans laquelle on exclut les points (10 ; 10.1, 10.2, ..., 10.n) projetés ne rencontrant pas le maillage (8) tridimensionnel de contrôle,
∘ on détermine une épaisseur (e) minimale d'usure de la pièce, mesurée entre la projection sur le maillage tridimensionnel dudit point projeté d'usure maximale (10) et un quatrième référentiel (9a), le quatrième référentiel (9a) étant propre à la pièce (4) et orienté par rapport au deuxième référentiel (9),
∘ on compare ladite épaisseur (e) minimale avec une plage de tolérance d'usure prédéterminée, et
- si le résultat de la comparaison d'épaisseur est compris dans la plage de tolérance d'usure prédéterminée, on définit la pièce (4) comme conforme, si le résultat de la comparaison n'est pas compris dans ladite plage de tolérance d'usure prédéterminée, on définit la pièce (4) comme non conforme.

2. Méthode de contrôle selon la revendication 1 dans laquelle l'épaisseur (e) minimale est mesurée perpendiculairement au quatrième référentiel (9a).

3. Méthode de contrôle selon la revendication 1 ou 2, **caractérisée en ce que** les points (10 ; 10.1, 10.2,..., 10.n) sont répartis de façon uniforme sur le plan de référence (5).

4. Méthode de contrôle selon l'une des revendications précédentes, **caractérisée en ce que** dans l'étape de comparaison, à partir des points (10) non exclus, on détermine une zone (11) spécifique à ladite pièce (4) définie parmi l'ensemble des points (10; 10.1, 10.2, ..., 10.n) croisant le maillage (8) tridimensionnel de contrôle.

5. Méthode de contrôle selon la revendication 4, **caractérisée en ce que** dans l'étape de comparaison, une deuxième sélection de points est effectuée, dans laquelle on exclut les points ne faisant pas partie de la zone (11) spécifique.

6. Méthode de contrôle selon la revendication 5, **caractérisée en ce que**, lors de la deuxième sélection de points, pour chaque point (10 ; 10.1, 10.2, ..., 10.n) projeté :
- on mesure un angle (α) entre la projection (P) dudit point (10 ; 10.1,10.2, ..., 1 0.n) projeté et une normale (N) à une tangente (T) au maillage (8) tridimensionnel de contrôle, au croisement de la projection (P) dudit point avec le maillage (8) tridimensionnel de contrôle, et
- on compare ledit angle (α) avec une plage de tolérance angulaire prédéterminée,
et, si l'angle (α) est compris dans ladite plage de tolérance angulaire, alors le point (10 ; 10.1, 10.2, ..., 10.n) est pris en compte par l'algorithme dédié pour définir la conformité de la pièce (4), si l'angle (α) n'est pas compris dans ladite plage de tolérance angulaire, alors le point (10 ; 10.1, 10.2, ..., 10.n) n'est pas pris en compte pour définir la conformité de la pièce (1).

7. Méthode de contrôle selon la revendication 6, **caractérisée en ce que** la plage de tolérance est comprise entre 0° et 15°.

8. Méthode de contrôle selon l'une quelconque des revendications précédentes, **caractérisée en ce que** la pièce (4) comprend un revêtement qui la recouvre et dont l'épaisseur (e) minimale d'usure est à déterminer.

## Patentansprüche

1. Verfahren zur berührungslosen Maßprüfung vom Verschleiß eines Bauteils (4) einer Turbomaschine bzw. eines Turbotriebwerks, wobei das Verfahren Schritte umfasst, bei denen über einen Rechner (18)
- eine Bezugsebene (5) mit einem ersten Bezugssystem (6) definiert wird,
- durch Messen an dem zu prüfenden Bauteil (4) ein Modell von zumindest einem Teil des Bauteils (4) in Form eines dreidimensionalen Kontrollnetzes (8) mit einem zweiten Bezugssystem (9) erfasst wird, wobei das erste (6) und zweite Bezugssystem (9) jeweils in einer vorbestimmten Weise in Bezug auf ein drittes, der Turbomaschine bzw. dem Turbotriebwerk eigenes Bezugssystem (7) ausgerichtet werden, wobei die Bezugsebene (5) so definiert wird, dass sie Punkte (10) beinhaltet, die in einer zur Bezugsebene (5) senkrechten Projektion (P) von der Bezugsebene zum dreidimensionalen Kontrollnetz (8) projiziert werden;
- das Bauteil (4) in einem dem dreidimensionalen Netz (8) und der Bezugsebene (5) gemeinsamen Bereich mittels eines zugeordneten Algorithmus unter Verwendung einer Projektion von Punkten (10) geprüft wird, wobei
∘ für den gemeinsamen Bereich die Bezugsebene (5) ein Feld von theoretischen Punkten (10; 10.1, 10.2, ..., 10.n) enthält, die gemäß der zu der Bezugsebene (5) senkrechten Projektion (P) von der Bezugsebene zu dem dreidimensionalen Kontrollnetz (8) projiziert werden,
∘ für jeden projizierten Punkt (10; 10.1, 10.2, ..., 10.n), der auf das Netz trifft, ein Projektionsabstand zwischen der Bezugsebene (5), von der aus der Punkt projiziert wird, und dem Schnittpunkt des projizierten Punktes (10; 10.1, 10.2, ..., 10.n) mit dem dreidimensionalen Kontrollnetz (8) berechnet wird;
∘ die Projektionsabstände der projizierten Punkte, die auf das Netz treffen, verglichen werden, um aus den Projektionsabständen einen maximalen Abstand (dm) und den projizierten Punkt (10) maximalen Verschleißes, der diesem entspricht, zu identifizieren,
wobei das Verfahren **dadurch gekennzeichnet ist, dass**
∘ in einem Vergleichsschritt vor dem Vergleich der Projektionsabstände der Punkte eine erste Auswahl der Punkte (10) erfolgt, bei welcher diejenigen projizierten Punkte (10; 10.1, 10.1, ..., 10.n), die nicht auf das dreidimensionale Kontrollnetz (8) treffen, ausgeschlossen werden,
∘ eine minimale Verschleißdicke (e) des Bauteils bestimmt wird, gemessen zwischen der Projektion des projizierten Punktes (10) maximalen Verschleißes auf das dreidimensionale Netz und einem vierten Bezugssystem (9a), wobei das vierte Bezugssystem (9a) dem Bauteil (4) eigen ist und in Bezug auf das zweite Bezugssystem (9) ausgerichtet ist,
∘ die minimale Dicke (e) mit einem vorbestimmten Verschleiß-Toleranzbereich verglichen wird, und
- wenn das Ergebnis des Dickenvergleichs innerhalb des vorgegebenen Verschleiß-Toleranzbereichs liegt, das Bauteil (4) als konform definiert wird, und wenn das Ergebnis des Vergleichs nicht innerhalb des vorgegebenen Verschleiß-Toleranzbereichs liegt, das Bauteil (4) als nicht konform definiert wird.

2. Prüfverfahren nach Anspruch 1, wobei die minimale Dicke (e) senkrecht zum vierten Bezugssystem (9a) gemessen wird.

3. Prüfverfahren nach Anspruch 1 oder 2, **dadurch gekennzeichnet, dass** die Punkte (10; 10.1, 10.2, ..., 10.n) gleichmäßig über die Bezugsebene (5) verteilt sind.

4. Prüfverfahren nach einem der vorangehenden Ansprüche, wobei bei dem Vergleichsschritt ausgehend von den nicht ausgeschlossenen Punkten (10) ein für das Bauteil (4) spezifischer Bereich (11) bestimmt wird, der von den gesamten Punkten (10; 10.1, 10.2, ..., 10.n) definiert wird, welche das dreidimensionale Kontrollnetz (8) kreuzen.

5. Prüfverfahren nach Anspruch 4, **dadurch gekennzeichnet, dass** bei dem Vergleichsschritt eine zweite Auswahl von Punkten erfolgt, bei welcher diejenigen Punkte ausgeschlossen werden, die nicht zum spezifischen Bereich (11) gehören.

6. Prüfverfahren nach Anspruch 5, **dadurch gekennzeichnet, dass** bei der zweiten Auswahl von Punkten für jeden projizierten Punkt (10; 10.1, 10.2, ..., 10.n)
- ein Winkel (α) zwischen der Projektion (P) des projizierten Punkten (10; 10.1, 10.2, ..., 10.n) und einer Normalen (N) zu einer Tangente (T) des dreidimensionalen Kontrollnetzes (8) am Kreuzungspunkt der Projektion (P) des Punktes mit dem dreidimensionalen Kontrollnetz (8) gemessen wird, und
- der Winkel (α) mit einem vorbestimmten Winkeltoleranzbereich verglichen wird,
und, wenn der Winkel (α) in dem Winkeltoleranzbereich liegt, der Punkt (10; 10.1, 10.2, ..., 10.n) von dem zugeordneten Algorithmus berücksichtigt wird, um die Konformität des Bauteils (4) zu definieren, und wenn der Winkel (α) nicht in dem Winkeltoleranzbereich liegt, der Punkt (10; 10.1, 10.2, ..., 10.n) nicht berücksichtigt wird, um die Konformität des Bauteils (1) zu definieren.

7. Prüfverfahren nach Anspruch 6, **dadurch gekennzeichnet, dass** der Toleranzbereich zwischen 0° und 15° beträgt.

8. Prüfverfahren nach einem der vorangehenden Ansprüche, **dadurch gekennzeichnet, dass** das Bauteil (4) eine Beschichtung enthält, die dieses bedeckt und deren minimale Verschleißdicke (e) zu bestimmen ist.

## Claims

1. A contactless dimensional method of inspecting a wear of a part (4) of a turbine engine, wherein the method comprises stages in which, by means of a calculator (18):
- a reference plane (5) having a first reference frame (6) is defined;
- by measuring said part (4) to be inspected, a modelling of at least a portion of said part (4) is acquired, in the form of a three-dimensional inspection grid (8) having a second reference frame (9), the first (6) and second (9) reference frames being each oriented in a predetermined manner in relation to a third reference (7) frame specific to the turbine engine, said reference plane (5) being defined as comprising points (10) projected in a projection (P) perpendicular to said reference plane (5), from said reference plane, towards the three-dimensional inspection grid (8);
- the part (4) is inspected, in an area common to the three-dimensional grid (8) and the reference plane (5), through a dedicated algorithm using a projection of points (10) wherein:
∘ for said common area, the reference plane (5) comprises a field of theoretical points (10; 10.1, 10.2,..., 10.n) which are projected in said projection (P) perpendicular to said reference plane (5), from said reference plane, towards the three-dimensional inspection grid (8);
∘ for each projected point (10; 10.1, 10.2, ..., 10.n) encountering the three-dimensional inspection grid, a projection distance is calculated between the reference plane (5) from which said point is projected and the intersection of said projected point (10; 10.1, 10.2, .., 10.n) with the three-dimensional inspection grid (8);
∘ the projection distances of said projected points encountering the three-dimensional inspection grid are compared, so as to identify a maximum distance (dm) among said projection distances and a corresponding projected maximum wear point (10),
the process being **characterized in that**:
∘ during the comparison phase, before said comparison of the projection distances of points, an initial selection of the points (10) is made in which projected points (10 ; 10.1 ; 10.2, ..., 10.n) not encountering the three-dimensional inspection grid (8) are excluded.
∘ a minimum wear thickness (e) of the part is determined, measured between the projection on the three-dimensional grid of said projected maximum wear point (10) and a fourth reference frame (9a), wherein the fourth reference frame (9a) is specific to the part (4) and oriented in relation to the second reference frame (9),
∘ said minimum thickness (e) is compared with a predetermined wear tolerance range and
- if the result of the comparison of thickness is within said predetermined wear tolerance range, the part (4) is defined as compliant; if the result of the comparison is outside said predetermined wear tolerance range, the part (4) is defined as non-compliant.

2. Inspection method according to claim 1, wherein the minimum thickness (e) is measured perpendicularly to the fourth reference frame (9a).

3. Inspection method according to claim 1 or 2, **characterised in that** the points (10; 10.1, 10.2,..., 10.n) are distributed evenly over the reference plane (5).

4. Inspection method according to one of the preceding claims, **characterised in that** during the comparison stage and with reference to the points (10) not excluded, an area (11), specific to said part (4) and defined among all the points (10; 10.1, 10.2,..., 10.n) crossing the three-dimensional inspection grid (8), is determined.

5. Inspection method according to claim 4, **characterised in that** during the comparison stage, a second selection of points is made in which the points that do not form part of the specific area (11) are excluded.

6. Inspection method according to claim 5, **characterised in that** during the second selection of points, for each projected point (10; 10.1, 10.2, ..., 10.n):
- an angle (α) is measured between the projection (P) of said projected point (10; 10.1, 10.2, ..., 10.n) and a normal (N) at a tangent (T) to the three-dimensional inspection grid (8), at the crossing of the projection (P) of said point with the three-dimensional inspection grid (8) and
- said angle (α) is compared with a predetermined angular tolerance range,
and, if the angle (α) is included within said angular tolerance range, the point (10; 10.1, 10.2, ..., 10.n) is taken into account by the dedicated algorithm in defining compliance of the part (4); if the angle (α) is not included within said angular tolerance range, the point (10; 10.1, 10.2, ..., 10.n) is in this case not taken into account for defining compliance of the part (1).

7. Inspection method according to claim 6, **characterised in that** the tolerance range is included between 0° and 15°.

8. Inspection method according to any one of the above claims, **characterised in that** the part (4) comprises a coating that covers it, the minimum wear thickness (e) of which is to be determined.
